(19) Europäisches Patentamt
European Patent Office
Office européen des brevets

(11) Publication number: **0 330 755 B1**

(12) **EUROPEAN PATENT SPECIFICATION**

(45) Date of publication of patent specification: **17.03.93**

(51) Int. Cl.$^5$: **H02J 3/01**

(21) Application number: **88121204.7**

(22) Date of filing: **19.12.88**

(54) **Active filter device.**

(30) Priority: **04.03.88 JP 52035/88**

(43) Date of publication of application:
**06.09.89 Bulletin 89/36**

(45) Publication of the grant of the patent:
**17.03.93 Bulletin 93/11**

(84) Designated Contracting States:
**CH DE GB LI SE**

(56) References cited:
**EP-A- 0 254 073**

**PESC 87 RECORD 18th Annual IEEE Power Electronics Specialists Conference 1987, Blacksburg, Virginia, US pages 204 - 212; F. Peng et al: "A study of active power filters using quad-series voltage-source PWM converters for harmonic compensation "**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Takeda, Masatoshi Mitsubishi Denki K.K.**
**Power and Ind. Systems Center 1-2-1 Wadasakicho**
**Hyogo-ku Kobe-shi Hyogo(JP)**
Inventor: **Aritsuka, Tomohiko Mitsubishi Denki K.K.**
**Power and Ind. Systems Center 1-2-1 Wadasakicho**
**Hyogo-ku Kobe-shi Hyogo(JP)**
Inventor: **Tachibana, Yoshitaka Mitsubishi Control Software**
**K.K. Himeji Works Sanda Branch**
**3-33, Miwa 2-chome Sanda-shi Hyogo(JP)**

(74) Representative: **Eisenführ, Speiser & Partner**
**Martinistrasse 24**
**W-2800 Bremen 1 (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

## Description

### BACKGROUND OF THE INVENTION

### Field of the Invention

The present invention relates to an active filter device constituted by a PWM (Pulse Width Modulation) inverter.

### Description of the Prior Art

FIG. 1 is a circuit diagram of an active filter device in the prior art disclosed, for example, in "Study report of the institutes of electrical and information engineers of Japan in 1984" (Outdoor self-cooling voltage type active filter) published in April 1984.

In FIG. 1, numerals 1a to 1c designate three-phase AC power source, numerals 2a to 2c designate reactors, numerals 3a to 3f designate transistor switches, numeral 4 designates a capacitor, and numeral 5 designates an active filter which is constituted by the transistor switches 3a to 3f and the capacitor 4. The active filter 5 is connected through the reactors 2a to 2c to the three-phase AC power source 1a to 1c.

Numerals 6a to 6c designates current transformers for detecting input currents of the active filter 5, numeral 7 designates a harmonic current generating load, and numerals 8a to 8c designate current transformers which detect currents flowing in the harmonic current generating load 7.

Numerals 9a to 9c designate fundamental wave removing circuits, numerals 10a to 10c designate arithmetic circuits, and numerals 11a to 11c designate amplifier circuits which amplify outputs of the arithmetic circuits 10a to 10c in multiple of K.

Numerals 12a to 12c designate arithmetic circuits, and numeral 13 designates a PWM wave generating circuit. The current transformers 6a to 6c for detecting input currents, the harmonic current generating load 7, the current transformers 8a to 8c, the fundamental wave removing circuits 9a to 9c, the arithmetic circuits 10a to 10c, the amplifier circuits 11a to 11c, the arithmetic circuits 12a to 12c and the PWM wave generating circuit 13 constitute a control circuit. Each output of the PWM wave generating circuit 13 is outputted to base of the transistor switches 3a to 3f, and turns on or off the transistor switches 3a to 3f.

Next, operation will be described.

Currents $I_La$ to $I_Lc$ flowing in the harmonic current generating load 7 are detected as currents $I_La^*$ to $I_Lc^*$ through the current transformers 8a to 8c, and inputted to the fundamental wave removing circuits 9a to 9c.

The fundamental wave removing circuits 9a to 9c are composed of high-pass filters, and remove the fundamental component contained in the currents $I_La^*$ to $I_Lc^*$ and extract harmonic currents $I_Ra^*$ to $I_Rc^*$ only. The harmonic currents $I_Ra^*$ to $I_Rc^*$ act as current reference signal to the active filter 5, and active filter output currents $Ica^*$ to $Icc^*$ detected through the current transformers 6a to 6c for detecting input currents are outputted as feedback current and subtracting component of the arithmetic circuits 10a to 10c, and adding operation to the harmonic currents $I_Ra^*$ to $I_Rc^*$ which are outputted as adding components is executed thereby control deviations $\Delta Ia^*$ to $\Delta Ic^*$ are obtained.

The control deviations $\Delta Ia^*$ to $\Delta Ic^*$ are multiplied in K by the amplifier circuits 11a to 11c at next stage and outputted as adding component of the arithmetic circuits 12a to 12c at next stage, and adding to the power source voltages Ea to Ec outputted as subtracting component is executed and the adding output is outputted as control signals Ma to Mc to the PWM wave generating circuit 13.

Therefore in the PWM wave generating circuit 13, the control signals Ma to Mc are compared with triangular carrier signal (not shown), and command for ON/OFF operation of base of the transistor switches 3a to 3f is outputted. Corresponding to this, the transistor switches 3a to 3f charge the capacitor 4 and the charged voltage $E_1$ is subjected to the PWM modulation, thereby inverter output voltage $E_Fa$ to $E_Fc$ are generated and compensation currents Ica to Icc flow at the power source side.

Consequently, if the gain K of the amplifier circuits 11a to 11c is made sufficiently large, the compensation currents Ica to Icc and the harmonic currents $I_Ra^*$ to $I_Rc^*$ becomes nearly equal, and the harmonic current flowing in the harmonic current generating load 7 can be compensated by the compensation currents Ica to Icc.

Since the active filter device in the prior art is constituted as above described, on account of overhead time by upper and lower arm shortcircuit preventing dead time of the PWM wave generating circuit 13 mainly, overhead time by the ON-time and the OFF-time of the transistor switches 3a to 3f, and time delay by the offset of circuits such as the amplifier circuits 11a to 11c or the arithmetic circuits 12a to 12c, the following of the active filter output currents $Ica^*$ to $Icc^*$ being the feedback signal is delayed with respect to the harmonic currents $\Delta I_Ra^*$ to $\Delta I_Rc^*$ being the current reference signal, thereby the harmonic compensation capacity of the active filter device particularly the compensation capacity of higher harmonic current may be reduced.

## SUMMARY OF THE INVENTION

In order to solve the above-mentioned problems, an object of the invention is to provide an active filter device wherein feedback current can follow the current command value without delay thereby the compensation capacity of higher harmonic current is obtained.

An active filter device according to the invention comprises an arithmetic circuit which calculates deviation signal between the current command value and the feedback signal, a learning control circuit which inputs the deviation signal and outputs correction signal, and an arithmetic circuit which adds the correction signal to the current command value and generates current correction command value.

The foregoing and other objects and advantages of the invention will become clear by the following description taken in connection with the accompanying drawings.

## BRIEF DESCRIPTION OF THE DRAWINGS

FIG. 1 is a circuit constitution diagram of an active filter device in the prior art;

FIG. 2 is a circuit constitution diagram of an active filter device as an embodiment of the invention;

FIG. 3 is a circuit constitution diagram illustrating interior of a learning control circuit shown in FIG. 2; and

FIG. 4 is a waveform chart illustrating operation of an active filter device of the invention.

## DETAILED DESCRIPTION OF THE PREFERRED EMBODIMENTS

An embodiment of the invention will now be described referring to FIG. 2 and FIG. 3. In FIG. 2, parts designated by reference numerals 1 to 13 are similar to those designated by the same numerals in the prior art shown in FIG. 1.

In FIG. 2, numerals 14a to 14c designate arithmetic circuits, numerals 15a to 15c designate learning control circuits, and numerals 16a to 16c designate arithmetic circuits.

In FIG. 3, the learning control circuits 15a to 15c are composed of amplifier circuits 17a to 17c, first memory circuits 18a to 18c, arithmetic circuits 19a to 19c, amplifier circuits 20a to 20c, and second memory circuits 21a to 21c.

In FIG. 2, load currents $I_La$, $I_Lb$, $I_Lc$ are detected by current transformers 8a, 8b, 8c, and harmonic currents $I_Ra^*$, $I_Rb^*$, $I_Rc^*$ contained in $I_La$ to $I_Lc$ are extracted in fundamental wave removing circuits 9a to 9c and used as current reference signals to control the harmonic current.

On the other hand, currents Ica, Icb, Icc flowing in an active filter 5 are detected by current transformers 6a to 6c, and the detected signals are made Ica*, Icb*, Icc* and inputted to arithmetic circuits 14a to 14c respectively. In the arithmetic circuits 14a to 14c, deviations ΔIea*, ΔIeb*, ΔIec* between the harmonic current reference signals $I_Ra^*$ to $I_Rc^*$ and the active filter currents Ica to Icc are calculated, and then the results are inputted to the learning control circuits 15a to 15c at next stage.

In the learning control circuits 15a to 15c, as shown in FIG. 3, the deviation signals ΔIea*, ΔIeb*, ΔIec* are amplified by the amplifiers 17a to 17c in multiple of gain K1a to K1c, and further stored in the first memory circuits 18a to 18c and read in delay of the time (N-L) • Ts. Wherein Ts is a sampling period of the first memory circuits 18a to 18c. N is the equally dividing number that one period of the current command value is made Tf and equally divided in N as shown in FIG. 4, and it follows that Ts = Tf/N. Also L is adjusting element of the delay time at the read state.

Consequently, the delay time $T_A$ at the read state in the first memory circuit can be expressed as follows:

$$T_A = (N-L) \bullet Ts = N \bullet Ts - L \bullet Ts = Tf - L \bullet Ts \quad (1)$$

That is, the control deviations ΔIea*, ΔIeb*, ΔIec*, are delayed by (Tf - L • Ts) in the first memory circuit. In this case, L • Ts is selected nearly equal to the action delay time $T_D$ of the active filter.

Outputs of the first memory circuits 18a to 18c are inputted to the arithmetic circuits 19a to 19c at next stage, and added outputs of the second memory circuits 21a to 21c thereby $I_Ha^*$ to $I_Hc^*$ are outputted respectively. The second memory circuits 21a to 21c are those where the outputs $I_Ha^*$ to $I_Hc^*$ prior thereto by one period are multiplied by gain K2a to K2c in the amplifier circuits 20a to 20c respectively and then memorized.

The control action of the above-mentioned learning control circuits can be expressed by following formula.

$$I_Ha^*(\tau)n = K2a \bullet I_Ha^*(\tau)n\text{-}1 + Kla \bullet \Delta Iea^*(\tau + L)$$
$$I_Hb^*(\tau)n = K2b \bullet I_Hb^*(\tau)n\text{-}1 + Klb \bullet \Delta Ieb^*(\tau + L) \quad \text{-} (2)$$
$$I_Hc^*(\tau)n = K2c \bullet I_Hc^*(\tau)n\text{-}1 + Klc \bullet \Delta Iec^*(\tau + L)$$

Wherein letter $\tau$ within parentheses is the step number representing phase $2\pi(\tau/N)$ by dividing the power source voltage fundamental period Ts equally in N, and N integers from 0 to (N-1). Suffix at the lower right side, such as n, (n-1), represents the order of the period of the current command value, and (n-1)th period is prior to n-th period by one period.

The outputs $I_Ha^*$ to $I_Hc^*$ of the learning control circuits 15a to 15c are added to the harmonic current reference signals $I_Ra^*$ to $I_Rc^*$ in the arithmetic circuits 16a to 16c, and inputted as new harmonic current reference signals $I_R2a^*$ to $I_R2c^*$ into the arithmetic circuits 10a to 10c thereby deviations $\Delta Ia^*$ to $\Delta Ic^*$ to the output current signals $Ica^*$ to $Icc^*$ of the active filter are calculated. The current control operation subsequent to this is similar to the prior art shown in FIG. 1, and the description shall be omitted.

Since the control circuit of the active filter of the invention is controlled as above described, the action delay of the active filter can be compensated by the learning control circuits 15a to 15c.

The compensation function will be described referring to the waveform of FIG. 4.

FIG. 4(a) shows the harmonic current reference signal $I_Ra^*$ of output of the fundamental wave removing circuit 9a. Assume now that the harmonic current reference signal $I_Ra^*$ is outputted from the time $t_o$ shown in FIG. 4(a). Since output of the first memory circuit 18a in the learning control circuit 15a becomes 0 until the time $t_1$ after lapse of $(Tf - L \cdot Ts)$ from $t_o$, 0 is held until the time $t_1$ as shown in FIG. 4(e). Consequently, during period of $t_o$ to $t_1$, the second harmonic current reference value $I_R2a^*$ is equal to the first harmonic current reference value $I_Ra^*$.

If the the action delay time of the active filter is made Td, the output current $Ica^*$ of the active filter is delayed by Td with respect to the second harmonic current reference signal $I_R2a^*$ and outputted as shown in FIG. 4(c). As a result, the deviation $\Delta Iea^*$ between the harmonic current $I_Ra^*$ of the load and the compensation current $Ica^*$ by the active filter is generated as shown in FIG. 4(d). The deviation signal is delayed by $(Tf - L \cdot Ts)$ and outputted as $I_Ha^*$ after the time $t_1$ as shown in FIG. 4(e).

The $I_Ha^*$ is added to $I_Ra^*$, and acts to advance the phase of $I_Ra^*$ as shown in FIG. 4(b).

As a result, the deviation signal $\Delta Iea^*$ becomes small after the time $t_1$ as shown in FIG. 4 Since $\Delta Iea^*$ after the time $t_1$ is added to $I_Ha^*$ prior thereto by one period as shown by formula (2), $\Delta Iea^*$ becomes 0 at the steady state and the deviation due to the control delay of the active filter can be completely compensated.

In FIG. 4, even if the order of the amplifier circuits 17a to 17c and the first memory circuits 18a to 18c or the order of the amplifier circuits 20a to 20c and the second memory circuits 21a to 21c is exchanged, or in FIG. 1, even if the order of the amplifier circuits 24a to 24c and the first memory circuits or the order of the amplifier circuits 26a to 26c and the second memory circuits 27a to 27c is exchanged, effect of the learning control circuit is similar to that of the embodiment.

According to the invention as above described, since the output current of the active filter being in the control delay with respect to the current correction command value becomes coincident with the current command value at the steady state, the harmonic compensation property of the active filter device can be improved.

## Claims

**1.** An active filter device wherein harmonic component of load current is made a current command value ($I_{Ra}^*$, $I_{Rb}^*$, $I_{Rc}^*$), and output current ($I_{ca}$, $I_{cb}$, $I_{cc}$) is controlled according to the current command value, said active filter (5) comprising:

a deviation arithmetic circuit (14a, 14b, 14c) for calculating deviation between ($\Delta I_{ea}^*$, $\Delta I_{eb}^*$, $\Delta I_{ec}^*$) the current command value and detected signals ($I_{ca}^*$, $I_{cb}^*$, $I_{cc}^*$) representing the output current; characterized by

a memory circuit (18a, 18b, 18c) for storing output of said deviation arithmetic circuit corresponding to at least one period of the current command value; and

a learning control circuit (15a, 15b, 15c) for reading the storage content of said memory circuit in the preceding by prescribed time and for controlling the output current of said active filter based on a current correction command value as a result of adding (16a, 16b, 16c) the read content ($I_{Ha}^*$, $I_{Hb}^*$, $I_{Hc}^*$) to the current command value inputted at that time.

**2.** An active filter device as set forth in claim 1, wherein said memory circuit (18a, 18b, 18c) is composed of a plurality of memories corresponding to a plurality of times by equally dividing at least one period of the current command value ($I_{Ra}^*$, $I_{Rb}^*$, $I_{Rc}^*$), and said control circuit (15a, 15b, 15c) samples output of said deviation arithmetic circuit (14a, 14b, 14c) at the plurality of times and adds the sampled values to the content already stored in said memory corresponding to each time and stores the added values in sequence, and reads in sequence the content in the memory preceding by prescribed time and performs control based on said current correction command value as a result of adding the read value to the current command value.

**3.** An active filter device as set forth in claim 1, wherein the memory read preceding time is made less than the time corresponding to one period of said current command value ($I_{Ra}$*, $I_{Rb}$*, $I_{Rc}$*) by the action delay time of said active filter device.

## Patentansprüche

1. Aktivfilteranordnung, bei welcher eine harmonische Komponente eines Laststromes zu einem Stromsteuerwert ($I_R$a*, $I_R$b*, $I_R$c*) gemacht wird und ein Ausgangsstrom (Ica, Icb, Icc) in Abhängigkeit vom Strombefehlswert gesteuert wird, wobei der Aktivfilter (5)
eine Abweichungsarithmetikschaltung (14a, 14b, 14c) zur Berechnung der Abweichung (ΔIea*, ΔIeb*, ΔIec*) zwischen dem Strombefehlswert und den den Ausgangsstrom repräsentierenden gemessenen Signalen (Ica*, Icb*, Icc*) aufweist;
gekennzeichnet durch
eine Speicherschaltung (18a, 18b, 18c) zum Abspeichern des Ausgangssignals der Abweichungsarithmetikschaltung entsprechend mindestens einer Periode des Strombefehlswertes; und
eine lernende Regelschaltung (15a, 15b, 15c) zum Auslesen des um eine vorbestimmte Zeitdauer vorausgegangenen Speicherinhaltes der Speicherschaltung und zur Steuerung des Ausgangsstromes des Aktivfilters auf der Grundlage eines Stromkorrekturbefehlswertes als ein Ergebnis einer Addition (16a, 16b, 16c) des ausgelesenen Inhaltes ($I_H$a*, $I_H$b*, $I_H$c*) zum zu dieser Zeit angegebenen Strombefehlswert.

2. Aktivfilteranordnung nach Anspruch 1, bei welcher die Speicherschaltung (18a, 18b, 18c) aus mehreren Speichern entsprechend einer Vielzahl von Zeiträumen durch gleichmäßiges Teilen von mindestens einer Periode des Strombefehlswertes ($I_R$a*, $I_R$b*, $I_R$c*) besteht und die Regelschaltung (15a, 15b, 15c) das Ausgangssignal der Abweichungsarithmetikschaltung (14a, 14b, 14c) zu mehreren Zeitpunkten abtastet und die abgetasteten Werte zum bereits im Speicher abgespeicherten Inhalt entsprechend jedem Zeitpunkt hinzuaddiert und die addierten Werte in einer Reihenfolge abspeichert und in der Reihenfolge den um eine bestimmte Zeitdauer vorausgegangenen Inhalt im Speicher ausliest und eine Steuerung auf der Grundlage des Stromkorrekturbefehlswertes als Ergebnis einer Addition des gelesenen Wertes zum Strombefehlswert durchführt.

3. Aktivfilteranordnung nach Anspruch 1, bei welcher die dem Speicherauslesen vorangegangene Zeit kleiner als die Zeit entsprechend einer Periode des Strombefehlswertes ($I_R$a*, $I_R$b*, $I_R$c*) um die Wirkungsverzögerungszeit der Aktivfilteranordnung gemacht wird.

## Revendications

1. Dispositif de filtrage actif dans lequel une composante harmonique du courant de charge est utilisée comme valeur de commande de courant ($I_R$a*, $I_R$b*, $I_R$c*), et le courant de sortie (Ica, Icb, Icc) est commandé en fonction de la valeur de commande de courant, ledit filtre actif (5) comprenant :
un circuit arithmétique d'écart (14a, 14b, 14c) pour calculer un écart (ΔIea*,ΔIeb*,ΔIec*) entre la valeur de commande de courant et les signaux détectés (Ica*, Icb*, Icc*) représentant le courant de sortie ; caractérisé par
un circuit de mémoire (18a, 18b, 18c) pour mémoriser la sortie dudit circuit arithmétique d'écart correspondant au moins à une période de la valeur de commande de courant ; et
un circuit de commande auto-adaptatif (15a, 15b, 15c) pour lire le contenu de la mémoire dudit circuit de mémoire en avance d'un temps prescrit et pour commander le courant de sortie dudit filtre actif sur la base d'une valeur de commande de correction de courant en tant que résultat de l'addition (16a, 16b, 16c) du contenu lu ($I_H$a*, $I_H$b*, $I_H$c*) à la valeur de commande de courant entrée à ce moment.

2. Dispositif de filtrage actif selon la revendication 1, dans lequel ledit circuit de mémoire (18a, 18b, 18c) est composé d'une pluralité de mémoires correspondant à une pluralité d'instants en divisant de manière égale au moins une période de la valeur de commande de courant ($I_R$a*, $I_R$b*, $I_R$c*), et dans lequel ledit circuit de commande (15a, 15b, 15c) échantillonne la sortie dudit circuit arithmétique d'écart (14a, 14b, 14c) à la pluralité d'instants et additionne les valeurs échantillonnées au contenu déjà mémorisé dans ladite mémoire correspondant à chaque instant et mémorise les valeurs additionnées dans l'ordre, et lit en séquence le contenu de la mémoire en avance d'un temps prescrit et effectue la commande sur la base de ladite valeur de commande de correction de courant en tant que résultat de l'addition de la valeur lue à la valeur de commande de courant.

3. Dispositif de filtrage actif selon la revendication 1, dans lequel le temps d'avance de lecture de la mémoire est rendu inférieur, au temps correspondant à une période de ladite valeur de commande de courant ($I_R$a*, $I_R$b*, $I_R$c*), du temps de retard d'action dudit dispositif de filtrage actif.

FIG. 1

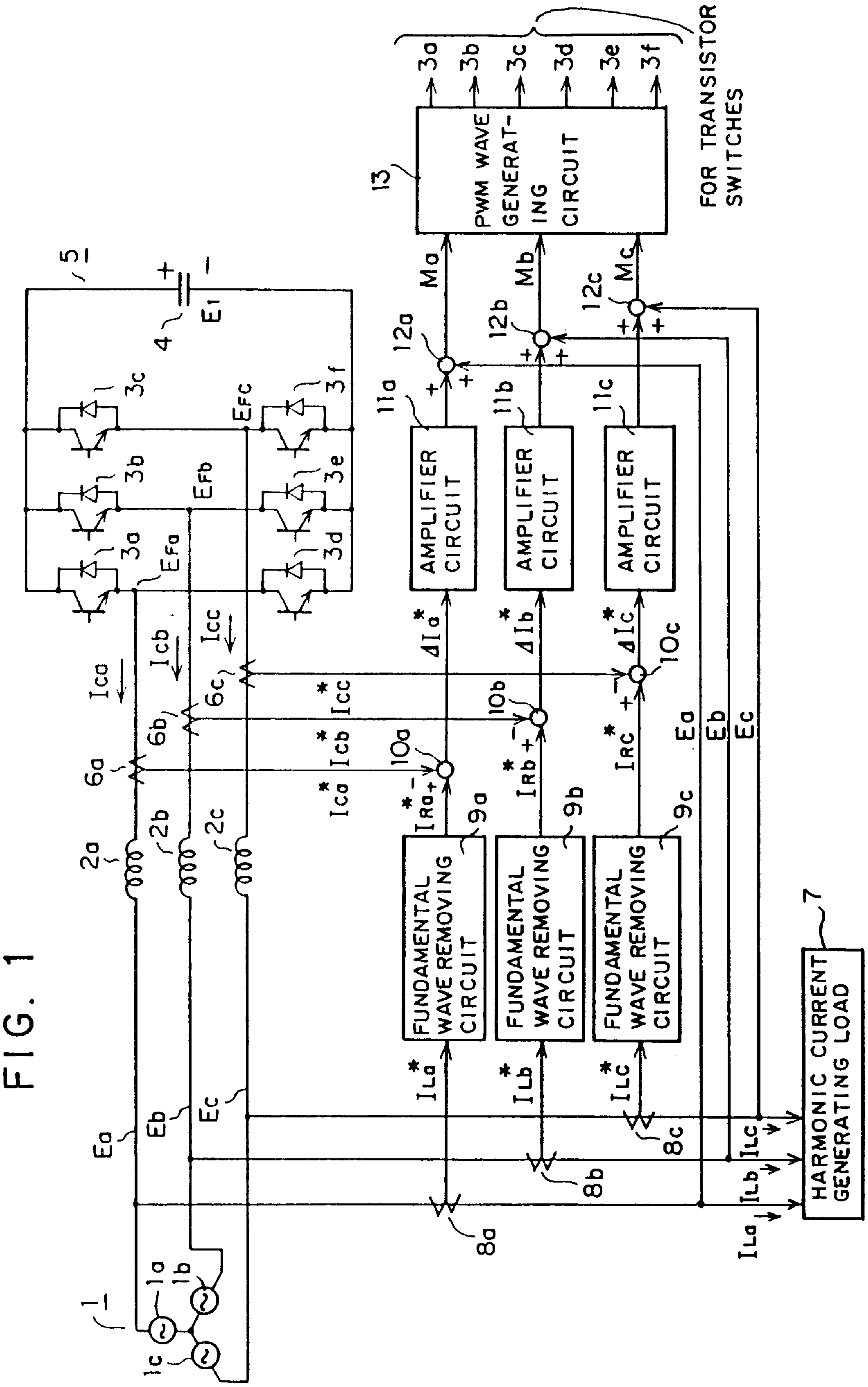
1
1a
1b
1c
Ea
Eb
Ec
2a
2b
2c
6a
6b
6c
Ica
Icb
Icc
3a
3b
3c
3d
3e
3f
EFa
EFb
EFc
4
E1
5
+
-
8a
8b
8c
ILa
ILb
ILc
7
HARMONIC CURRENT GENERATING LOAD
ILa*
ILb*
ILc*
9a
9b
9c
FUNDAMENTAL WAVE REMOVING CIRCUIT
FUNDAMENTAL WAVE REMOVING CIRCUIT
FUNDAMENTAL WAVE REMOVING CIRCUIT
IRa*
IRb*
IRc*
Ica*
Icb*
Icc*
10a
10b
10c
ΔIa*
ΔIb*
ΔIc*
11a
11b
11c
AMPLIFIER CIRCUIT
AMPLIFIER CIRCUIT
AMPLIFIER CIRCUIT
12a
12b
12c
Ma
Mb
Mc
13
PWM WAVE GENERAT-ING CIRCUIT
3a
3b
3c
3d
3e
3f
FOR TRANSISTOR SWITCHES

FIG. 2

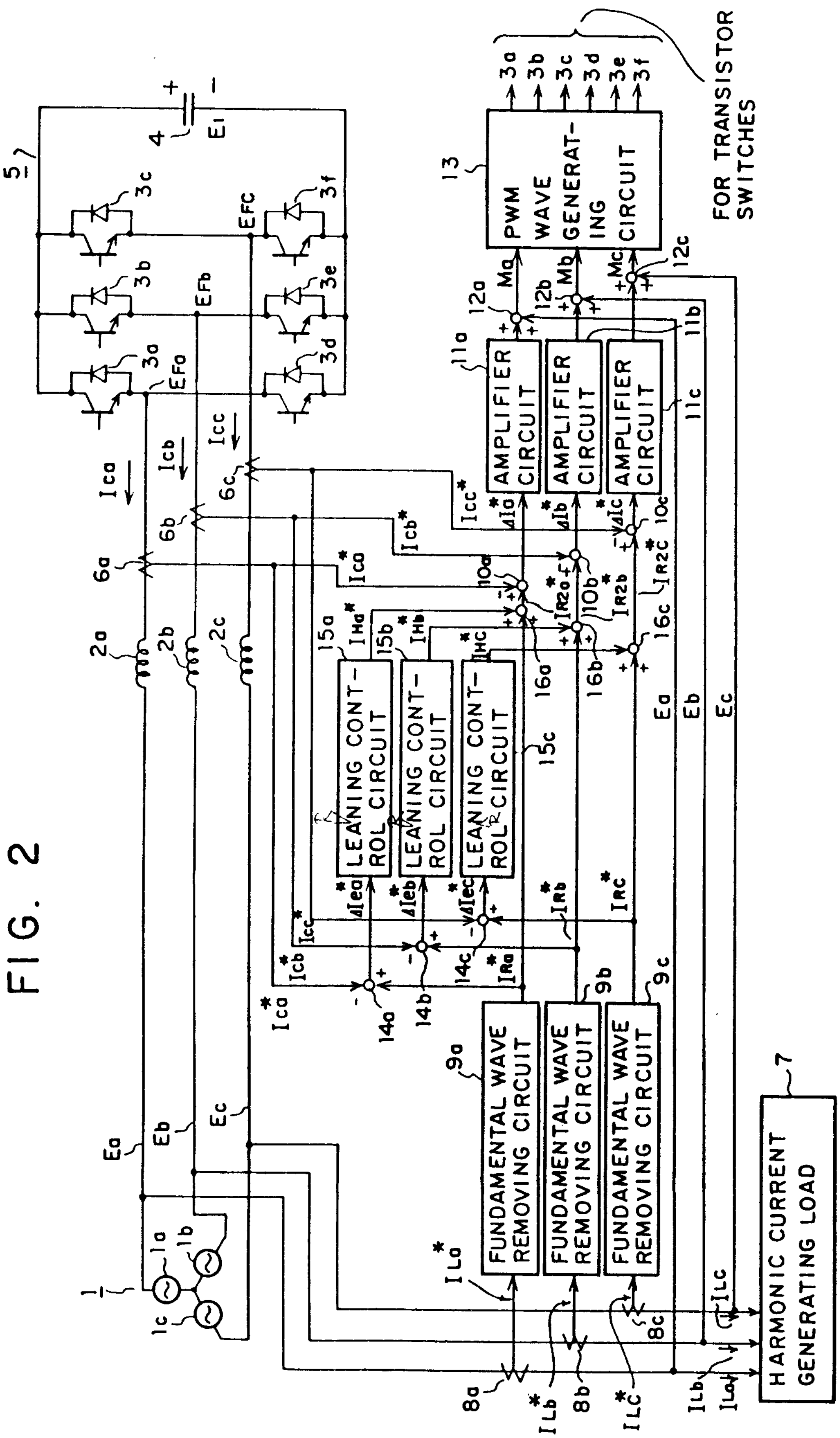
FOR TRANSISTOR SWITCHES
PWM WAVE GENERATING CIRCUIT
AMPLIFIER CIRCUIT
AMPLIFIER CIRCUIT
AMPLIFIER CIRCUIT
LEANING CONTROL CIRCUIT
LEANING CONTROL CIRCUIT
LEANING CONTROL CIRCUIT
FUNDAMENTAL WAVE REMOVING CIRCUIT
FUNDAMENTAL WAVE REMOVING CIRCUIT
FUNDAMENTAL WAVE REMOVING CIRCUIT
HARMONIC CURRENT GENERATING LOAD

FIG. 3

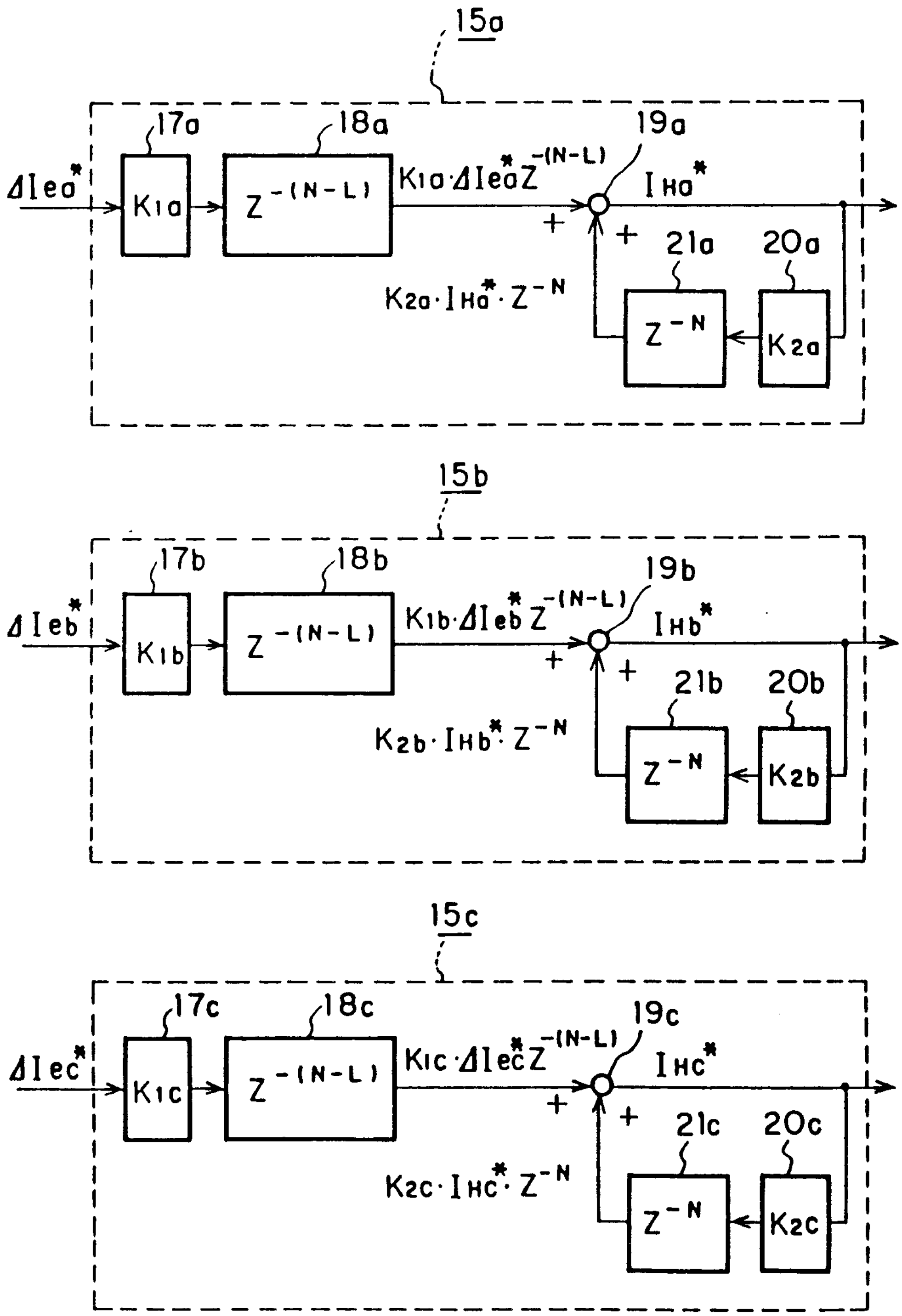
15a
17a
18a
19a
ΔIea*
K1a
Z^-(N-L)
K1a·ΔIea*Z^-(N-L)
IHa*
+
+
21a
20a
K2a·IHa*·Z^-N
Z^-N
K2a
15b
17b
18b
19b
ΔIeb*
K1b
Z^-(N-L)
K1b·ΔIeb*Z^-(N-L)
IHb*
+
+
21b
20b
K2b·IHb*·Z^-N
Z^-N
K2b
15c
17c
18c
19c
ΔIec*
K1c
Z^-(N-L)
K1c·ΔIec*Z^-(N-L)
IHc*
+
+
21c
20c
K2c·IHc*·Z^-N
Z^-N
K2c

FIG. 4

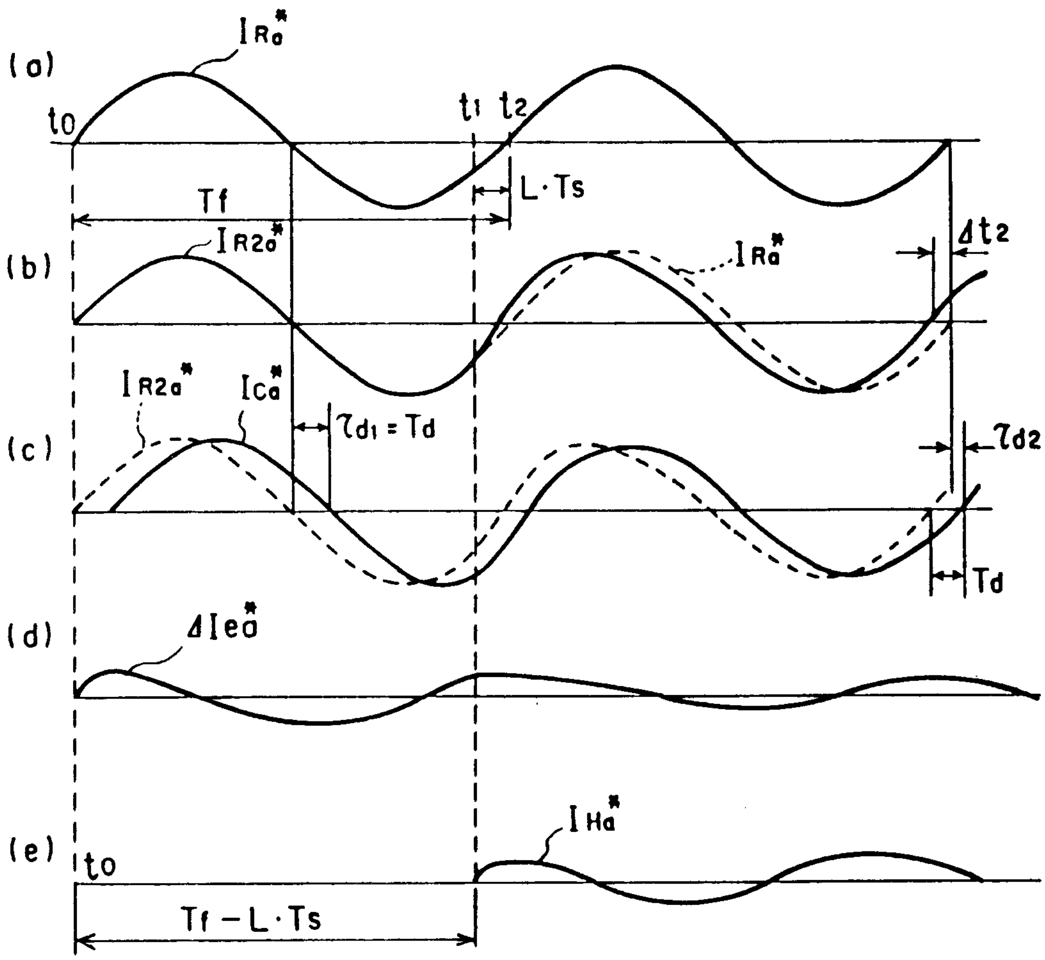
(a)
IRa*
t0
t1
t2
L·Ts
Tf
(b)
IR2a*
IRa*
Δt2
(c)
IR2a*
ICa*
τd1 = Td
τd2
Td
(d)
ΔIea*
(e)
IHa*
to
Tf − L·Ts